# EUROPEAN PATENT APPLICATION

(11) **EP 4 814 268 A1**
(43) Date of publication of application: **30.09.2026**
(21) Application number: 26155565.0
(22) Date of filing: 30.01.2026
(51) Int. Cl.: F01L 1/02, F01L 1/053, F01L 1/20, F16H 55/18

(54) **EMBEDDED BACKLASH ADJUSTER**

(30) Priority: 25.03.2025 US 202519090064
(71) Applicant: Deere & Company, Moline, IL 61265 (US)
(72) Inventor: Base, Douglas S., 68163 Mannheim (DE); Pawar, Sachin W., 68163 Mannheim (DE)
(74) Representative: Reichert, Christian

(57) **Abstract**

An embedded backlash adjuster (166) for an overhead cam work vehicle engine system having an engine block (122) to which is mounted a valve head (164) with a valve train (182, 184) operated by a cam shaft (178, 180) that is driven by an input gear assembly (128) including a cam gear (142) mounted to the cam shaft (178) that meshes with a head idler gear (140) which in turn meshes with an engine idler gear (138), the head idler gear (140) spanning a head gasket disposed between the engine block (122) and the valve head (164), the embedded backlash adjuster (166) comprising: a plurality of mounting bolts (160); a stub shaft (162) mounted to the valve head (164) or a component of the valve head (164) by the mounting bolts (160) and supporting the head idler gear (140) for rotation about a rotation axis (A1); and a pivot member (170) extending along a pivot axis (A4) and disposed within a recess (194) in the valve head (164) or a component of the valve head (164), the stub shaft (162) being pivotable about the pivot axis (A4) with respect to the valve head (164) when not fixed securely by the mounting bolts (160) without repositioning the pivot member (170), and the pivot axis (A4) being radially offset from the rotation axis (A1) such that pivoting the stub shaft (162) about the pivot axis (A4) adjusts a mesh backlash between the head idler gear (140) and the engine idler gear (138) while maintaining a working mesh backlash between the head idler gear (140) and the cam gear (142).

## Description

### FIELD OF THE DISCLOSURE

This disclosure generally relates to internal combustion engines and the gear mesh backlash between gears therein.

### BACKGROUND OF THE DISCLOSURE

Work vehicles may be powered by internal combustion engines (e.g., diesel engines). These engines include a plurality of piston-cylinder arrangements that operate to generate combustion events. Intake air and exhaust gas can be directed into these piston-cylinder arrangements by valves that are open and closed based on the rotation of a camshaft. The camshaft may be driven by a gear that is part of a valve gear assembly driven by a crankshaft of the engine. Operation of the engine (e.g., timing of the combustion events) may be impacted by the amount of backlash between gears within the gear assembly.

### SUMMARY OF THE DISCLOSURE

In one implementation, an embedded backlash adjuster for an overhead cam work vehicle engine system is disclosed. The work vehicle engine system has an engine block to which is mounted a valve head with a valve train operated by a cam shaft that is driven by an input gear assembly. The input gear assembly includes a cam gear mounted to the cam shaft that meshes with a head idler gear which in turn meshes with an engine idler gear. The head idler gear spans a head gasket disposed between the engine block and the valve head. The embedded backlash adjuster includes a plurality of mounting bolts, a stub shaft mounted to the valve head or a component of the valve head by the mounting bolts and supporting the head idler gear for rotation about a rotation axis, and a pivot member extending along a pivot axis and disposed within a recess in the valve head or a component of the valve head. The stub shaft is pivotable about the pivot axis with respect to the valve head when not fixed securely by the mounting bolts without repositioning the pivot member. The pivot axis is radially offset from the rotation axis such that pivoting the stub shaft about the pivot axis adjusts a mesh backlash between the head idler gear and the engine idler gear while maintaining a working mesh backlash between the head idler gear and the cam gear.

In an example of the embedded backlash adjuster, the pivot member is positioned within a recess in the stub shaft and extends away from the stub shaft along the pivot axis. In a further example of the embedded backlash adjuster, the pivot axis is positioned above the rotation axis and toward the cam gear.

In a further example of the embedded backlash adjuster, the embedded backlash adjuster further includes a removable fixing member for positioning the stub shaft to set the mesh backlash between the head idler gear and the engine idler gear. The removable fixing member is disposed in a second recess in the valve head or a component of the valve head. In a further example of the embedded backlash adjuster, the removable fixing member is positioned within a through-hole in the stub shaft, and wherein the removable fixing member extends out of the through-hole and away from the stub shaft.

In a further example of the embedded backlash adjuster, the pivot member includes a first pin with one end of the first pin positioned within the recess in the stub shaft and the other end of the first pin positioned within the recess in the valve head or a component of the valve head. The removable fixing member includes a second pin with one end of the second pin positioned within the through-hole in the stub shaft and the other end of the second pin positioned within into the second recess in the valve head or a component of the valve head.

In a further example of the embedded backlash adjuster, the removable fixing member is positioned within a second recess in the stub shaft. The removable fixing member extends out of the second recess and away from the stub shaft.

In a further example of the embedded backlash adjuster, the mesh backlash between the head idler gear and the engine idler gear is set based on the removable fixing member being positioned within the second recess by rotating the stub shaft around the pivot axis to align the removable fixing member with the second recess. In a further example of the embedded backlash adjuster, prior to any decking of the valve head or engine block, the removable fixing member is used to set the mesh backlash between the head idler gear and the engine idler gear. After decking the valve head or the engine block, the removable fixing member is removed from the stub shaft and the mesh backlash between the head idler gear and the engine idler gear is set based on feeler gauges.

In a further example of the embedded backlash adjuster, the stub shaft defines a plurality of mounting holes. The plurality of mounting bolts extend through the mounting holes. Each mounting hole comprises a hole diameter larger than a shaft diameter of the mounting bolt extending through the hole. When the stub shaft is not fixed securely by the mounting bolts, the hole diameter being larger than the shaft diameter allows the stub shaft to pivot about the pivot axis for adjustment of the mesh backlash between the head idler gear and the engine idler gear.

In one implementation an overhead cam engine of a work vehicle is disclosed. The overhead cam engine includes an engine block, a valve head positioned above and mounted to the engine block, and a head gasket positioned between the valve head and engine block. The valve head includes a valve train operated by a cam shaft. The overhead cam engine further includes a cam gear mounted to the cam shaft, an engine idler gear mounted to the engine block, and a head idler gear mechanically coupled to the valve head. The head idler gear is meshed with both the cam gear and the engine idler gear. The meshing of the head idler gear and engine idler gear spans the head gasket. The overhead cam engine further includes an embedded backlash adjuster. The embedded backlash adjuster includes a plurality of mounting bolts, a stub shaft mounted to the valve head or a component of the valve head by the mounting bolts and supporting the head idler gear for rotation about a rotation axis, and a pivot member extending along a pivot axis and disposed within a recess in the valve head or a component of the valve head. The stub shaft is pivotable about the pivot axis with respect to the valve head when not fixed securely by the mounting bolts without repositioning the pivot member. The pivot axis is radially offset from the rotation axis such that pivoting the stub shaft about the pivot axis adjusts a mesh backlash between the head idler gear and the engine idler gear while maintaining a working mesh backlash between the head idler gear and the cam gear.

In an example of the overhead cam engine, wherein the pivot member is positioned within a recess in the stub shaft and extends away from the stub shaft along the pivot axis. In a further example of the overhead cam engine, the pivot axis is positioned above the rotation axis and toward the head idler gear.

In a further example of the overhead cam engine, the embedded backlash adjuster further includes a removable fixing member for positioning the stub shaft to set the mesh backlash between the head idler gear and the engine idler gear. The removable fixing member is disposed in a second recess in the valve head or a component of the valve head. In a further example of the overhead cam engine, the removable fixing member is positioned within a through-hole in the stub shaft, and wherein the removable fixing member extends out of the through-hole and away from the stub shaft.

In a further example of the overhead cam engine, the pivot member includes a first pin with one end of the first pin positioned within the recess in the stub shaft and the other end of the first pin positioned within the recess in the valve head or a component of the valve head. The removable fixing member including a second pin with one end of the second pin positioned within the through-hole in the stub shaft and the other end of the second pin positioned within into the second recess in the valve head or a component of the valve head.

In a further example of the overhead cam engine, the removable fixing member is positioned within a second recess in the stub shaft. The removable fixing member extends out of the second recess and away from the stub shaft.

In a further example of the overhead cam engine, the mesh backlash between the head idler gear and the engine idler gear is set based on the removable fixing member being positioned within the second recess by rotating the stub shaft around the pivot axis to align the removable fixing member with the second recess. In a further example of the overhead cam engine, prior to any decking of the valve head or engine block, the removable fixing member is used to set the mesh backlash between the head idler gear and the engine idler gear. After decking the valve head or the engine block, the removable fixing member is removed from the stub shaft and the mesh backlash between the head idler gear and the engine idler gear is set based on feeler gauges.

In a further example of the overhead cam engine, the stub shaft defines a plurality of mounting holes. The plurality of mounting bolts extend through the mounting holes, wherein each mounting hole comprises a hole diameter larger than a shaft diameter of the mounting bolt extending through the hole. When the stub shaft is not fixed securely by the mounting bolts, the hole diameter being larger than the shaft diameter allows the stub shaft to pivot about the pivot axis for adjustment of the mesh backlash between the head idler gear and the engine idler gear.

### BRIEF DESCRIPTION OF THE DRAWINGS

FIG. 1 is a simplified side view of an example work vehicle having an engine in which an embedded backlash adjuster of the present disclosure may be incorporated;
FIG. 2 is a perspective view of an example engine with covers removed and exposing a valve gear assembly;
FIG. 3 is an enlarged cross-sectional view of cross-section line 3-3 of FIG. 2;
FIG. 4 is a rear view of the valve gear assembly of the engine;
FIG. 5 is a rear view of an adjustable head idler gear enmeshed with mating gears of the valve gear assembly;
FIG. 6 is a partial cross-sectional view of area 6-6 of FIG. 3 shown before and after a decking operation of the valve head or engine block;
FIG. 7 is an perspective cross-sectional view of the adjustable head idler gear; and
FIGS. 8A-8C are schematic diagrams illustrating application of the embedded backlash adjuster to set or adjust the backlash of an adjustable head idler gear.

Throughout the drawings, identical reference numbers designate the same element. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

Example embodiments of the present disclosure are shown in the accompanying figures of the drawings described briefly above. Various modifications to the example embodiments may be contemplated by one of skill in the art without departing from the scope of the present invention, as set forth in the appended claims.

### OVERVIEW

Many work vehicles are powered by internal combustion engines. These engines include a plurality of piston-cylinder arrangements that operate to cause combustion events. The engines may include a valve head attached to an engine block. A valve train may be housed within the valve head. The valve train may be operated by a cam shaft to control valves that manage the intake air in and exhaust gas out from the piston-cylinder arrangements. The camshaft may be driven by the engine to control the valve train to open and close the appropriate valves at the appropriate time. The camshaft being driven by a gear that is part of a gear assembly driven by a crankshaft of the engine. The gear assembly spans the interface been the valve head and the engine block where a head gasket is installed. The valve head or engine block may require to be decked (i.e., resurfaced) if there are visible signs of damage or warping on the cylinder head or engine block surface, if the engine has experienced overheating or head gasket failure, or various other reasons. The decking of the valve head or engine block removes a portion of the valve head or engine block to fix issues in the surface thereof. Some of the gears in the gear assembly need to be movable to account for the change in height of the valve head or engine block due to the decking. The position of these gears may be determined with feeler gauges that allow the backlash to be set between the gear meshes. However, the use of feeler gauges takes time and allows for the potential of user error. As such, limiting the use of feeler gauges or other manual means to set the backlash may limit the time of assembly as well as improve the accuracy for the placement of the gears in the gear assembly by removing the potential for human error.

The present disclosure provides an embedded backlash adjuster that simplifies setting the backlash between a head idler gear and a cam gear positioned above the head gasket and the head idler gear and an engine idler gear positioned below the head gasket. The embedded backlash adjuster includes a plurality of mounting bolts, a stub shaft, a pivot member, and a removable fixing member. The head idler gear is positioned to rotate around a rotation axis defined by the stub shaft and the stub shaft is fixed to the valve head by the mounting bolts. The stub shaft is mounted in a position to set the two backlashes for the head idler gear. The pivot member may extend from the stub shaft and couple with the valve head to position the stub shaft relative to the cam gear and engine idler gear. The pivot member may define a pivot axis that is radially offset from the rotation axis. Positioning the pivot member within a recess in the valve head may automatically set the backlash between the head idler gear and the cam gear. When the stub shaft is not fixed in position by the mounting bolts, the stub shaft may pivot about the pivot axis to adjust a mesh backlash between the head idler gear and the engine idler gear while maintaining a working mesh backlash between the head idler gear and the cam gear. When the valve head and engine block are not decked, the removable fixing member may couple with the valve head and the stub shaft to position the stub shaft to set the backlash between the head idler gear and the engine idler gear. After the vale head or engine block has been decked, the removable fixing member may be removed and the backlash between the head idler gear and the engine idler gear may be set by using feeler gauges or other means to set the gear backlash. Once the backlashes have been set and the position of the shaft determined, the stub shaft may be fixed in position relative to the engine by the mounting bolts.

The embedded backlash adjuster helps to limit the use of feeler gauges since a feeler gauge only needs used to set the backlash of one gear mesh after the valve head or engine block has been decked. As such, on a new engine or an engine with a new valve head, the backlashes may be set with the pivot member and removable fixing member without the need for feeler gauges. This process may speed up the assembly of the gear assembly and limit the potential for user error since feeler gauges are needed less often.

The pivot member may be attachable to the stub shaft and the valve head, the pivot member may be an integral part of the stub shaft, or the pivot member may be integral part of the valve head. If the pivot member is attachable, then the pivot member may be a pin inserted into a first recess defined in the stub shaft. The pin may extend from the stub shaft to allow the pin to be inserted into a second recess defined in the valve head. The second recess may be located on the valve head to position the stub shaft to set the backlash between the head idler gear and the cam gear. The stub shaft may pivot about the second recess in the valve head to adjust the backlash between the head idler hear and the engine idler gear while maintaining a working backlash between the head idler gear and the cam gear. Any other method of attaching an extending member to the stub shaft or valve head may also be used. For example, the pivot member may be a metal shaft. The metal shaft may be threaded and as such thread into the first recess defined in the stub shaft. A portion of the metal shaft may extend out of the recess and may be positioned within the second recess defined in the valve head. If the pivot member is an integral part of the stub shaft, then the pivot member may be a portion of the stub shaft that extends away from the stub shaft. This portion of the stub shaft may be inserted into the recess defined in the valve head. The recess may be located to position the stub shaft to set the backlash as described above regarding the attachable pivot member. Similarly, if the pivot member is an integral part of the valve head, then the pivot member may be a portion of the valve head that extends away from the valve head. This portion of the valve head may be inserted into the recess defined in the stub shaft. The portion of the valve head being located to position the stub shaft to set the backlash as described above regarding the attachable pivot member.

In some aspects, the removable fixing member may be attachable to the stub shaft. If the removable fixing member is attachable to the stub shaft, then the removable fixing member may be a pin inserted into a first hole defined in the stub shaft. The pin may extend from the stub shaft to allow the pin to be inserted into a second hole defined in the valve head to position the stub shaft to set the backlash between the head idler gear and the engine idler gear. In some aspects, the first hole defined in the stub shaft may be a through-hole. If the first hole is a through-hole then the stub shaft may be rotated about the pivot axis until the through-hole in the stub shaft aligns with the second hole in the valve head. Then the removable fixing member may be inserted into the through-hole and driven into a second hole in the valve head to fix the stub shaft in position. In various aspects, the second hole may be a recess in the valve head. If the first hole defined in the stub shaft is a recess, then the removable fixing member is inserted into the recess in the stub shaft, and the stub shaft may then be positioned such that the pivot member and removable fixing member are inserted into their respective recesses in the valve head to fix the stub shaft in position. Any other method of attaching an extending member to the stub shaft may also be used. For example, the removable fixing member may be a metal shaft. The metal shaft may be threaded and as such thread into the recess defined in the stub shaft. A portion of the metal shaft may extend out of a recess in the stub shaft and may be positioned within the corresponding recess defined in the valve head. If the valve head or engine block is decked, then the stub shaft may be removed from the valve head and the removable fixing member may be removed. The stub shaft may then be position back on the valve head with the pivot member extending into its corresponding recess. This process allows the backlash between the head idler gear and the engine idler gear may be set using a feeler gauge, while the backlash between the cam gear and the head idler gear is set based on the position of the pivot member in the first recess in the valve head.

In some alternative aspects, the removable fixing member may be an integral part of the stub shaft or valve head. In either case, the removable fixing member would be used to set the backlash between the header idler gear and the engine idler gear when the valve head or engine block has not been decked. If the removable fixing member is an integral part of the valve head, then this portion of the valve head would extend away from the valve head and be positioned within a recess in the stub shaft to appropriately position the stub shaft. If the removable fixing member is an integral part of the stub shaft, then this portion of the stub shaft would extend away from the stub shaft and be positioned within a recess in the valve head to appropriately position the stub shaft. When the valve head or engine block is decked, the removable fixing member may be cut away from its base part to remove the removable fixing member. Once removed, the stub shaft may rotate about the pivot axis to set the backlash between the head idler gear and the engine idler gear with feeler gauges or another means to set the gear backlash.

The stub shaft may be mounted on the valve head or the engine block. The above description has the head idler gear being positioned around the stub shaft and the stub shaft being mounted on the valve head. In this approach, when the valve head or engine block is decked the head idler gear is movable to adjust the backlash between the head idler gear and the engine idler gear. It desired to be noted that a similar approach may be applied to the engine idler gear to have the engine idler gear be the movable gear and the head idler gear be fixed in position. In this alternative approach, the head idler gear is fixed in position relative to the valve head and the backlash between the head idler gear and the cam gear is set by the fixed position. The engine idler gear may be mounted around the stub shaft and the stub shaft may be mounted to the engine block. The stub shaft may function the same as previously described but with it setting different backlashes since it is positioned within a different gear. For example, the pivot member and removable fixing member may be positioned in recesses in the engine block to set the backlash between the engine idler gear and the head idler gear and the backlash between the engine idler gear and another gear meshed with the engine idler gear. The pivot member may position the engine idler gear to set the backlash between the engine idler gear and another gear meshed with the engine idler gear. The stub shaft may pivot about the pivot axis to adjust the gear mesh backlash between the engine idler gear and the header idler gear while maintaining the backlash between the engine idler gear and the another gear meshed with the engine idler gear. When the valve head and engine block are not decked, then the removable fixing member may be used to set the backlash between the engine idler gear and the head idler gear. After the valve head or engine block has been decked, the removable fixing member is removed and the backlash between the engine idler gear and the head idler gear may be set using or other means to set the gear backlash. For example, a dial indicator may also be used to set the gear backlash. The dial indicator may be set at the pitch circle of the gear tooth to measure the amount of rotation on a particular gear where the other gears are locked in place.

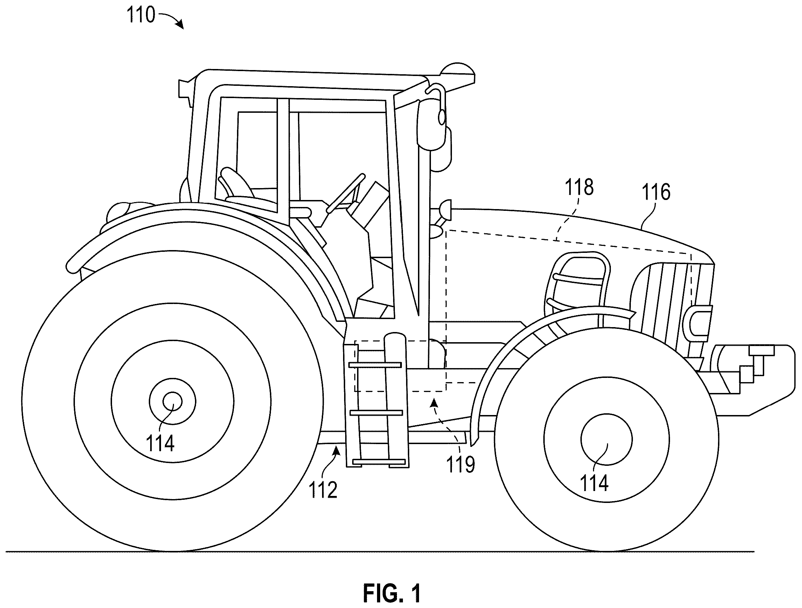

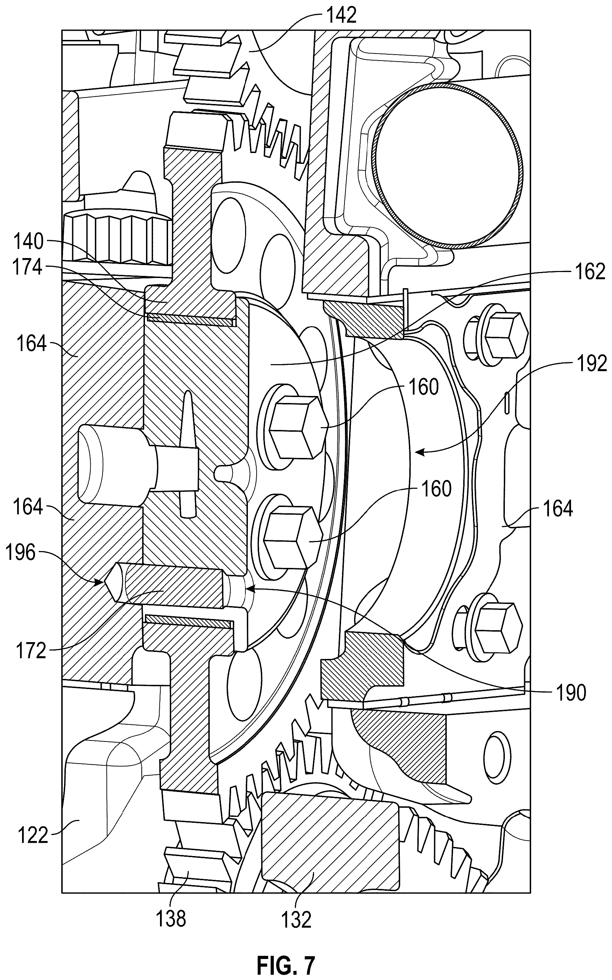

An example embodiment of an embedded backlash adjuster is provided in FIGS. 1-8C according to the present disclosure. The following description should be understood as merely providing a non-limiting example context in which embodiments of the present disclosure may be better understood.

### EXAMPLE EMBEDDED BACKLASH ADJUSTER

Referring to FIG. 1, a work vehicle 110 is shown that can implement embodiments of the disclosure. In the illustrated example, the work vehicle 110 is depicted as an agricultural tractor. It will be understood, however, that other configurations may be possible, including configurations with the work vehicle 110 as a different kind of tractor, a harvester, a log skidder, a grader, or one of various other work vehicle platforms. The work vehicle 110 includes a chassis or frame 112 carried on front and rear wheels (or tracks) 114. Positioned on a forward end region of the chassis 112 is an engine housing 116 within which is located an engine system 118. The engine system 118 provides power via an associated powertrain 119 to an output member (e.g., an output shaft, not shown) that, in turn, transmits power to axle(s) of the work vehicle 110 to provide propulsion thereto and/or to a power take-off shaft for powering an implement on or associated with the work vehicle 110, for example.

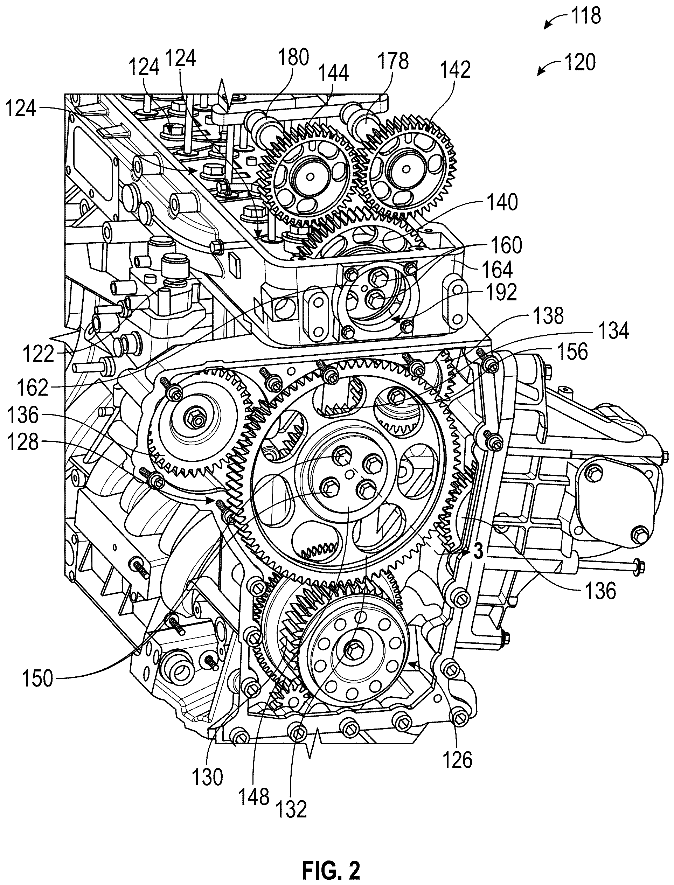

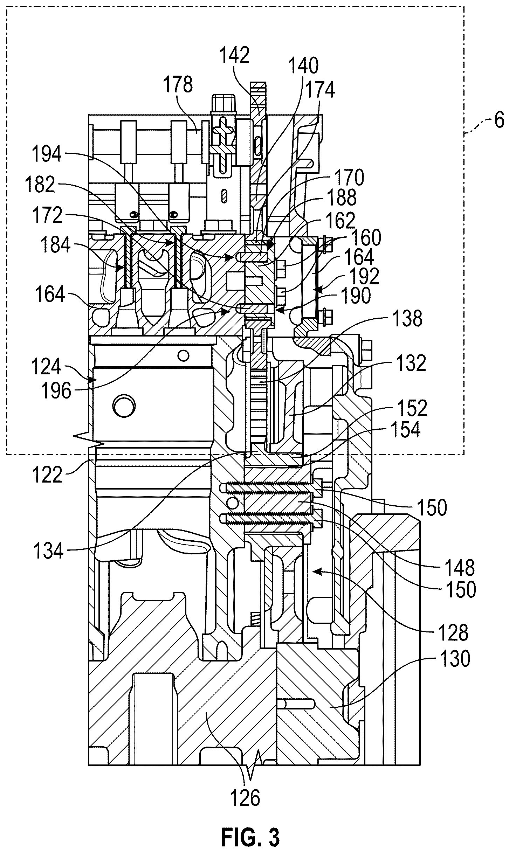

The engine system 118 is illustrated in greater detail in FIG. 2 in accordance with an example implementation. Referring to FIG. 2, the engine system 118 includes an internal combustion engine 120 (hereafter, "engine") that, in different embodiments, may be a compression- or spark-ignition internal combustion engine. The engine 120 being an overhead cam engine. The engine 120 includes an engine block 122 having a plurality of piston-cylinder arrangements 124 that operate to cause combustion events. There could be various numbers of piston-cylinder arrangements 124 defined in the engine 120. The number of piston-cylinder arrangements 124 may be defined by the style and layout of the engine 120. In alternative implementations different engine styles and layouts may be used. Referring still to FIGS. 2 and 3, the engine 120 includes a crankshaft 126 and a gear assembly 128 that is driven by the crankshaft 126. For example, the ignition of fuel in the piston-cylinder arrangements 124 defined in the engine 120 causes the crankshaft 126 to rotate which drives the gear assembly 128. The gear assembly 128 includes a crankshaft gear 130, a bull gear 132, a block gear 134, at least one accessory gear 136, a block idler gear 138, an adjustable head idler gear 140, a first camshaft drive gear 142, and a second camshaft drive gear 144. The crankshaft gear 130 is attached to the crankshaft 126 and rotates with the crankshaft 126. As such, the crankshaft gear 130 is the input that drives the gear assembly 128. The gear assembly 128 takes the rotational power produced by the rotation of the crankshaft 126 due to ignition of fuel and transfers that power to be used to drive and power the work vehicle 110.

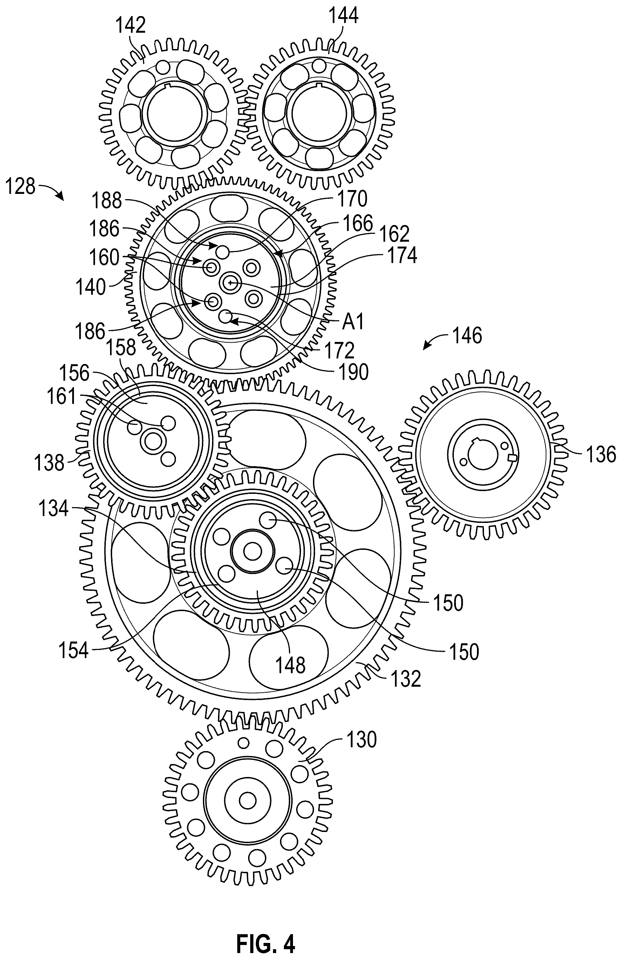

Referring also to FIG. 4, the bull gear 132 is meshed with the crankshaft gear 130 and is driven by the crankshaft gear 130. For example, gear teeth on the crankshaft gear 130 are meshed with gear teeth on the bull gear 132. Similarly, one or more accessory gears 136 may also be meshed with the bull gear 132 and be driven by the bull gear 132. Each accessory gear 136 may drive a different element of the engine system 118. For example, an accessory gear 136 may be used to drive a water pump, a compressor, a pump, or various other components of the engine system 118.

The bull gear 132 and the block gear 134 form a compound gear 146 that is attached to the engine block 122. The block gear 134 may include a protrusion 152 extending away from the block gear 134. The bull gear 132 may be positioned over the protrusion 152 and be mechanically coupled to the protrusion 152. For example, the protrusion 152 may include exterior splines that mate with interior splines of the bull gear 132. As such, the bull gear 132 and block gear 134 may rotate together. The bull gear 132 and block gear 134 may rotate about a first shaft 148 mounted to the engine block 122. In at least one aspect, a bushing 154 may be positioned between the block gear 134 and the first shaft 148. The bushing 154 may allow the block gear 134 and the bull gear 132 to rotate relative to the first shaft 148. Mounting bolts 150 may extend through holes in the first shaft 148 to attach and fix the first shaft 148 to the engine block 122. As such, the first shaft 148 is fixed to the engine block 122 and the bull gear 132 and block gear 134 may be driven by the crankshaft gear 130 to rotate relative to the engine block 122 and first shaft 148. The first shaft 148 is positioned on the engine block 122 such that there is a desired gear mesh backlash between the bull gear 132 and the crankshaft gear 130.

The block gear 134 is meshed with the block idler gear 138. For example, gear teeth on the block gear 134 are meshed with gear teeth on the block idler gear 138. In at least one aspect, the block idler gear 138 is driven by rotation of the block gear 134. The block idler gear 138 may rotate about a second shaft 156 mounted to the engine block 122. In at least one aspect, a bushing 158 may be positioned between the block idler gear 138 and the second shaft 156. The bushing 158 may allow the block idler gear 138 to rotate relative to the second shaft 156. Mounting bolts 161 may extend through the holes in the second shaft 156 to attach and fix the second shaft 156 to the engine block 122. The second shaft 156 is positioned on the engine block 122 such that there is a desired gear mesh backlash between the block idler gear 138 and the block gear 134.

The block idler gear 138 is meshed with the adjustable head idler gear 140. For example, gear teeth on the block idler gear 138 are meshed with gear teeth on the adjustable head idler gear 140. In at least one aspect, the adjustable head idler gear 140 is driven by rotation of the block idler gear 138. The adjustable head idler gear 140 is positioned on an embedded backlash adjuster 166. The embedded backlash adjuster 166 includes a plurality of mounting bolts 160, a stub shaft 162, a pivot member 170, a removable fixing member 172, and a bushing 174. The embedded backlash adjuster 166 is mounted on a valve head 164 of the engine system 118. Referring to FIG. 3, the valve head 164 is mounted on top of the engine block 122 with a gasket positioned between the engine block 122 and valve head 164.

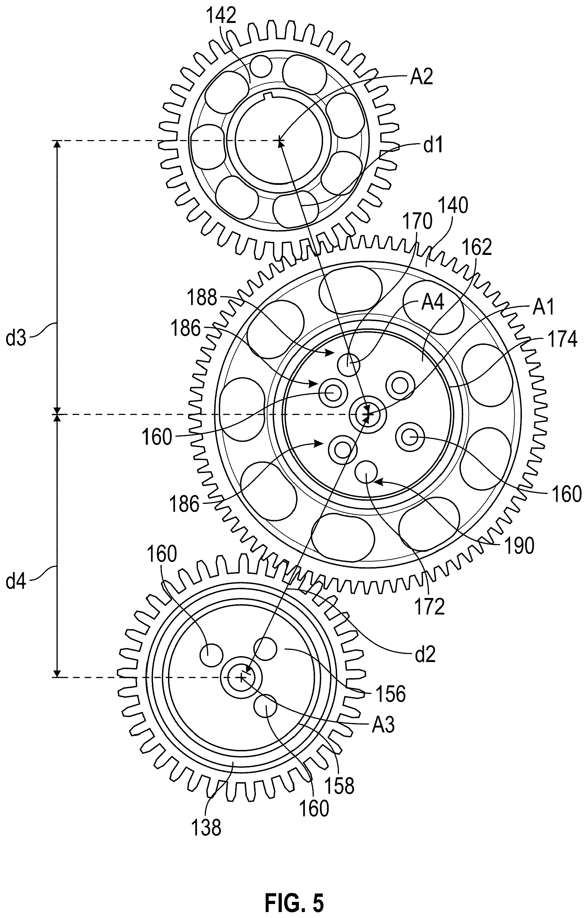

The adjustable head idler gear 140 may rotate about the stub shaft 162 that is mounted to the valve head 164. The stub shaft 162 defining a rotation axis A1 for the adjustable head idler gear 140 to rotate about. In at least one aspect, the bushing 174 may be positioned between the adjustable head idler gear 140 and the stub shaft 162. The bushing 174 may allow the adjustable head idler gear 140 to rotate relative to the stub shaft 162. Mounting bolts 160 may extend through holes 186 in the stub shaft 162 to attach and fix the stub shaft 162 to the valve head 164. The stub shaft 162 is positioned on the valve head 164 such that there is a desired gear mesh backlash between the adjustable head idler gear 140 and the block idler gear 138. As will be discussed further regarding FIGS. 5-8C, the pivot member 170 and removable fixing member 172 may be used to help an operator adjust and/or initially position the stub shaft 162 on the valve head 164 to achieve the desired gear mesh backlash between the adjustable head idler gear 140 and the block idler gear 138.

The first camshaft drive gear 142 is meshed with the adjustable head idler gear 140. For example, gear teeth on the adjustable head idler gear 140 are meshed with gear teeth on the first camshaft drive gear 142. In at least one aspect, the first camshaft drive gear 142 is driven by rotation of the adjustable head idler gear 140. Referring also to FIGS. 2 and 3, the first camshaft drive gear 142 is mechanically coupled to a first camshaft 178. The stub shaft 162 is positioned on the valve head 164 such that there is also a desired gear mesh backlash between the adjustable head idler gear 140 and the first camshaft drive gear 142. As such, the stub shaft 162 is positioned to maintain the working gear mesh backlash between the adjustable head idler gear 140 and the first camshaft drive gear 142 and the working gear mesh backlash between the adjustable head idler gear 140 and the block idler gear 138. As will be discussed further regarding FIGS. 5-8C, the pivot member 170 may be used to help an operator position the stub shaft 162 on the valve head 164 to maintain a working gear mesh backlash between the adjustable head idler gear 140 and the first camshaft drive gear 142.

Referring to FIG. 4, the first camshaft drive gear 142 is meshed with the second cam shaft gear 144. For example, gear teeth on the second cam shaft gear 144 are meshed with gear teeth on the first camshaft drive gear 142. In at least one aspect, the second cam shaft gear 144 is driven by rotation of the first camshaft drive gear 142. Referring to FIGS. 2 and 3, the second cam shaft gear 144 is mechanically coupled to a second camshaft 180. The camshafts 178, 180 are positioned such that there is an acceptable working gear mesh backlash between the first camshaft drive gear 142 and the second cam shaft gear 144.

Referring to FIG. 2, a valve head cover is removed exposing the first camshaft drive gear 142, the second camshaft drive gear 144, the first camshaft 178, and the second camshaft 180. The rotation of the adjustable head idler gear 140 drives the first camshaft drive gear 142 and the following rotation of the first camshaft drive gear 142 drives the second cam shaft gear 144. The rotation of the first camshaft drive gear 142 causes the first camshaft 178 to rotate, and the rotation of the first camshaft 178 may drive a plurality of exhaust valves. The rotation of the second camshaft drive gear 144 causes the second camshaft 180 to rotate, and the rotation of the second camshaft 180 may drive a plurality of intake valves. Referring to FIG. 3, each piston cylinder arrangement 124 has an intake valve assembly 182 and an exhaust valve assembly 184. The intake valve assemblies 182 and the exhaust valve assembly 184 extend from the second camshaft 180 and first camshaft 178, respectively, into the valve head 164. The first camshaft 178 rotates to open and close the exhaust valve assemblies 184 at the appropriate times to facilitate combustion in the piston cylinder arrangements 124. The second camshaft 180 rotates to open and close the intake valve assemblies 182 at the appropriate times to facilitate combustion in the piston cylinder arrangements 124. This combustion causes the crankshaft 126 to rotate. As such, the rotation of the camshafts 178, 180 control the timing of the intake valve assemblies 182 and exhaust valve assemblies 184 to facilitate the operation of the engine system 118.

Referring also to FIGS. 5-7, the valve head 164 is mounted on top of the engine block 122 with a gasket positioned between the engine block 122 and valve head 164. The adjustable head idler gear 140 spans the interface been the valve head 164 and the engine block 122 where the head gasket is installed. The stub shaft 162 is positioned on the valve head 164 such that the gear mesh backlash is set between the adjustable head idler gear 140 and the first camshaft drive gear 142 and the adjustable head idler gear 140 and the block idler gear 138. For example, the two gear mesh backlashes may set to be between 30 to 300 microns.

Mounting bolts 160 may extend through holes 186 in the stub shaft 162 to attach the stub shaft 162 to the valve head 164. The position of the stub shaft 162 is adjustable on the valve head 164 to allow the two gear mesh backlashes to be set. The diameter of the holes 186 may be larger than the diameter of the mounting bolts 160. As such, when the mounting bolts 160 are loosened and not removed, the position of the stub shaft 162 may be moved relative to the valve head 164. The difference between the diameters allows for the movement for adjustment of the stub shaft 162. The difference in size of the holes 186 may be designed to allow the stub shaft 162 enough movement to set the gear mesh backlashes to the desired amount. The valve head 164 defines an opening 192 in the front of the valve head 164 to allow an operator to access the mounting bolts and stub shaft 162. In at least one aspect, an operator may loosen or tighten the mounting bolts 160 through the opening 192.

Referring to FIG. 5, the first camshaft drive gear 142 rotates about a second rotation axis A2, the adjustable head idler gear 140 rotates about a first rotation axis A1, and the block idler gear 138 rotates about a third rotation axis A3. The second rotation axis A2 is a first distance d1 from the second rotation axis A2. The second rotation axis A2 is a second distance d2 from the third rotation axis A3. The second rotation axis A2 is a third vertical distance d3 from the second rotation axis A2, and the second rotation axis A2 is a fourth vertical distance d4 from the third rotation axis A3.

The stub shaft 162 defines a first recess 188 and a through-hole 190. The valve head 164 defines a third recess 194 and a fourth recess 196. The pivot member 170 defines a pivot axis A4. In at least one aspect, the pivot member 170 is positioned within the first recess 188 in the stub shaft 162 and extends away from the stub shaft 162 along the pivot axis A4 and into the third recess 194 in the valve head 164. For example, the pivot member 170 may be a pin with one end of the pin positioned within the first recess 188 and the other end of the pin positioned within the third recess 194. As such, the pivot member 170 may be press fit into both the stub shaft 162 and the valve head 164. In an alternative aspect, the pivot member 170 may be an integral part of the stub shaft 162 or the valve head 164 and may be used to position the stub shaft 162 relative to the valve head 164.

The pivot member 170 may be used to position the stub shaft 162 relative to the valve head 164 to set the gear mesh backlash between the adjustable head idler gear 140 and the first camshaft drive gear 142. When the stub shaft 162 is not fixedly secured by the mounting bolts 160, the stub shaft 162 and adjustable head idler gear 140 may pivot about the pivot axis A4 without repositioning the pivot member 170. The pivot axis A4 is radially offset from the first rotation axis A1 such that pivoting the stub shaft 162 about the pivot axis A4 adjusts a mesh backlash between the adjustable head idler gear 140 and the block idler gear 138 while maintaining a working mesh backlash between the adjustable head idler gear 140 and the first camshaft drive gear 142. As shown in FIG. 5, the pivot axis A4 may be positioned above the first rotation axis A4 and toward the first camshaft drive gear 142. The position of the pivot axis A4 is such that the gear mesh backlash between the adjustable head idler gear 140 and the first camshaft drive gear 142 is maintained within a desired threshold throughout pivoting about the pivot axis A4. In at least one aspect, the desired threshold is between 30 to 300 microns. The distance d1 may change slightly based on the pivoting.

The pivot member 170 may be used by an operator to set the gear mesh backlash between the adjustable head idler gear 140 and the first camshaft drive gear 142 without feeler gauges or other manual means of setting the gear backlash. An operator may position the pivot member 170 inside the first recess 188 in the stub shaft 162. The pivot member 170 will then extend along the pivot axis A4 out of and away from the stub shaft 162. The pivot member 170 may be press fit into the first recess 188. The operator may then position the stub shaft 162 against the valve head 164 such that the pivot member 170 is positioned within the third recess 194 in the valve head 164. The pivot member 170 may also be press fit into the third recess 194. This positioning of the stub shaft 162 sets the gear mesh backlash between the adjustable head idler gear 140 and the first camshaft drive gear 142 to be within the desired threshold without feeler gauges. The operator may then position the mounting bolts 160 through the holes 186 in the stub shaft 162 to be positioned within the valve head 164. At this point the mounting bolts remain loose/not tightened to allow the stub shaft 162 to pivot about the pivot access A4. The operator may then pivot the stub shaft 162 about the pivot access to position the stub shaft 162 to set the gear mesh backlash between the adjustable head idler gear 140 and the block idler gear 138 to be within the desired threshold. After that the mounting bolts 160 may be tightened to fix the stub shaft 162 in the position that sets both the gear mesh backlashes within the desired threshold. Throughout the pivoting of the stub shaft 162 about the pivot axis A4, a gear mesh backlash within the desired threshold is maintained between the adjustable head idler gear 140 and the first camshaft drive gear 142.

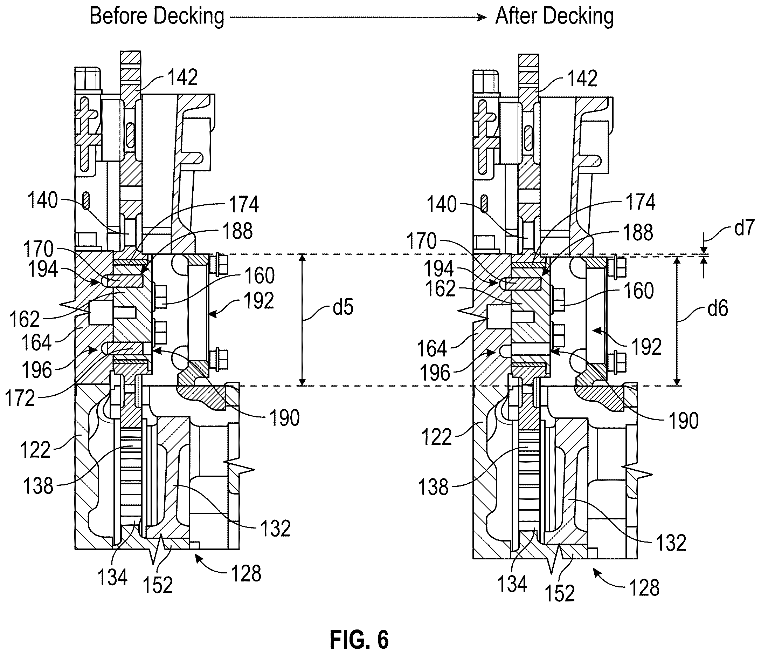

When maintenance or repairs require the valve head 164 to be removed, the valve head 164 or engine block 122 may be decked removing a portion of the valve head 164 where the gasket was located. Referring to FIG. 6, the vertical height d5 of the valve head 164 is greater before the decking the valve head than the vertical height d6 after the decking. As such a vertical height d7 was removed by the decking. The adjustable head idler gear 140 spans the interface between the valve head 164 and engine block 122. The vertical height d7 is small however this removal of material requires the stub shaft 162 to be in a first position before decking and a second position after the decking for the gear mesh backlash between the adjustable head idler gear 140 and the block idler gear 138 to be within the desired threshold. The first position being different than the second position. Before decking the valve head 164 or engine block 122, the removable fixing member 172 may be used to position the stub shaft 162 in the first position; however, after decking the valve head 164 or the engine block 122 the removable fixing member 172 is removed and not used to position the stub shaft 162. This being due to the first position being different from the second position. For positioning the stub shaft 162 in the second position, the stub shaft 162 may be pivoted about the pivot axis A4 and feeler gauges or other manual means for setting the gear backlash may be used.

The removable fixing member 172 may be used by an operator to set the gear mesh backlash between the adjustable head idler gear 140 and the block idler gear 138 without feeler gauges when the valve head 164 or engine block have not been decked. This allows the operator to position the adjustable head idler gear 140 to set both gear mesh backlashes without feeler gauges when the valve head 164 or engine block have not been decked. As such, this may improve the speed and precision of the positioning of the adjustable head idler gear 140 for new builds of the engine system 118. After the valve head 164 or the engine block 122 has been decked, then feeler gauges may be used to set the gear mesh backlash between the adjustable head idler gear 140 and the block idler gear 138.

Before any decking of the valve head 164 or engine block 122, the removable fixing member 172 may be used by an operator to set the gear mesh backlash between the adjustable head idler gear 140 and the block idler gear 138. In at least one aspect, the removable fixing member 172 is positioned within the through-hole 190 in the stub shaft 162 and extends away from the stub shaft 162 and into the fourth recess 196 in the valve head 164. For example, the removable fixing member 172 may be a pin with one end of the pin positioned within the through-hole 190 and the other end of the pin positioned within the fourth recess 196. As such, the removable fixing member 172 may be press fit into both the stub shaft 162 and the valve head 164. In an alternative aspect, the removable fixing member 172 may be an integral part of the stub shaft 162 or the valve head 164 and may be used to position the stub shaft 162 relative to the valve head 164.

An operator may first position the pivot member 170 within the stub shaft 162 and then position the stub shaft 162 against the valve head 164 such that the pivot member 170 extends into the third recess 194 as described above. Positioning the pivot member 170 within the first recess 188 and the third recess 194 sets the gear mesh backlash between the adjustable head idler gear 140 and the first camshaft drive gear 142 to be within the desired threshold. When there has been no decking to the valve head 164 or engine block 122, the operator may pivot the stub shaft 162 about the pivot access A4 to align the fourth recess 196 in the valve head 164 with the through-hole 190 in the stub shaft 162. The operator may then insert the removable fixing member 172 into the through-hole 190 and drive the removable fixing member 172 through the through-hole 190 to reach the valve head 164. As such, the removable fixing member 172 has one end of the removable fixing member 172 positioned within the through-hole 190 of the stub shaft 162 and the other end of the removable fixing member 172 positioned within the fourth recess 196 of the valve head 164. The removable fixing member 172 may be press fit into the through-hole 190 and the fourth recess 196. Positioning the removable fixing member 172 within the through-hole 190 and the fourth recess 196 sets the gear mesh backlash between the adjustable head idler gear 140 and the block idler gear 138 to be within the desired threshold. Throughout the pivoting of the stub shaft 162 about the pivot axis A4, a gear mesh backlash within the desired threshold is maintained between the adjustable head idler gear 140 and the first camshaft drive gear 142. Once the pivot member 170 and removable fixing member 172 have been appropriately positioned within the stub shaft 162 and valve head 164, then the operator may tighten the mounting bolts 160 to fixedly secure the stub shaft 162 to the valve head 164.

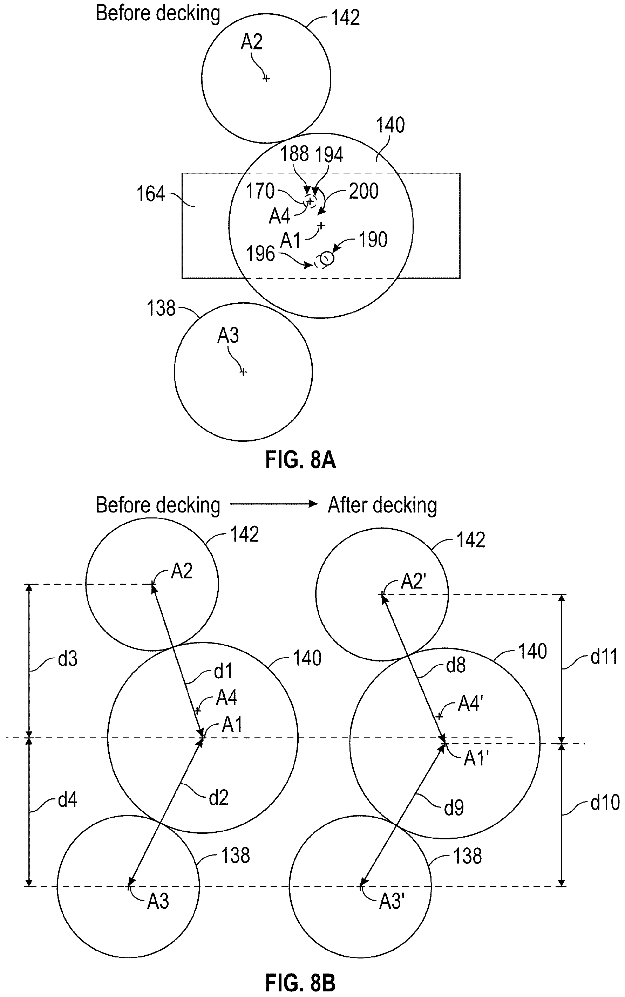

After decking occurs to the valve head 164 or engine block 122, the pivot member 170 may be used to set the gear mesh backlash between the adjustable head idler gear 140 and the first camshaft drive gear 142. The stub shaft 162 may be pivoted about the pivot axis A4 and feeler gauges may be used to find the position of the stub shaft 162 that sets the gear mesh backlash between the adjustable head idler gear 140 and the block idler gear 138 to be within the desired threshold. The removable fixing member 172 is not used after decking the valve head 164 or the engine block 122 since using the removable fixing member 172 would position the stub shaft 162 in the same position as before the decking. As discussed above, the stub shaft 162 needs placed in a new position after the decking to have both gear mesh backlashes be within the desired threshold. FIG. 6 shows the stub shaft 162 positioned against the valve head 164 before and after decking the valve head 164 or the engine block 122. The pivot member 170 is positioned within the first recess 188 and the third recess 194 both before and after decking the valve head 164 or the engine block 122. The removable fixing member 172 is positioned within the through-hole 190 and fourth recess 196 before the decking and is not used after the decking. This is due to the stub shaft 162 needing to be in a new position after the decking where the through-hole 190 is not aligned with the fourth recess 196. In an alternative aspect, the through-hole 190 may be a second recess in the stub shaft 162. In this aspect, before any decking has occurred, the operator may position both the pivot member 170 and removable fixing member 172 in the stub shaft 162. The pivot member 170 and removable fixing member 172 both extending away from the stub shaft 162. The stub shaft 162 may then be positioned against the valve head 164 such that the pivot member 170 extends into the third recess 194 and the removable fixing member 172 extends into the fourth recess 196. As such, in this position of the stub shaft 162 the gear mesh backlash between the adjustable head idler gear 140 and the first camshaft drive gear 142 and the gear mesh backlash between the adjustable head idler gear 140 and the block idler gear 138 are both set within the desired threshold. After decking occurs, the removable fixing member 172 may be removed and the new position of the stub shaft 162 determined as described above using feeler gauges and the pivot member 170. FIGS. 8A-8C are simplified illustrations that show the movement of the adjustable head idler gear 140 to set the gear mesh backlash between the adjustable head idler gear 140 and the block idler gear 138. The illustrations are drawn with some exaggerated movements for visibility purposes. FIG. 8A shows movement of the adjustable head idler gear 140 before decking the valve head 164 or engine block 122, where the gear mesh backlashes may be set using the pivot member 170 and the removeable fixing member 172. The dashed lines in FIG. 8A are hidden from the normal view. As discussed previously, the pivot member 170 may be positioned within the first recess 188 and the third recess 194. This positioning of the adjustable head idler gear 140 sets the gear mesh backlash between the adjustable head idler gear 140 and the first camshaft drive gear 142. The stub shaft 162 and adjustable head idler gear 140 may then rotate in the pivot direction 200 about the pivot axis A4 to align the through-hole 190 with the fourth recess 196. Once aligned, the removable fixing member 172 may be positioned within the through-hole 190 and the fourth recess 196 to position the adjustable head idler gear 140 to set the gear mesh backlash between the adjustable head idler gear 140 and the block idler gear 138.

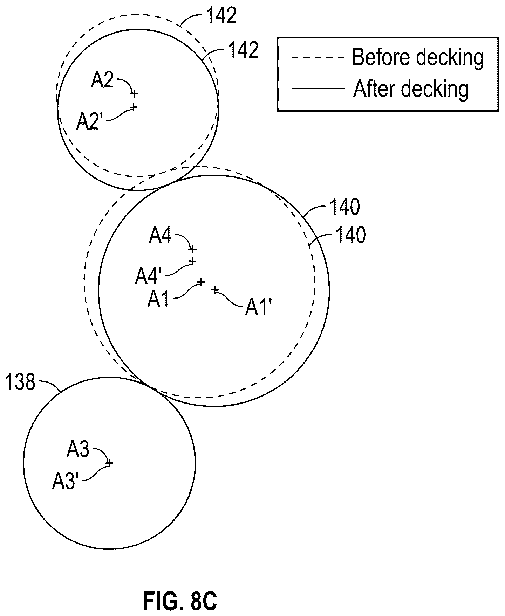

FIG. 8B and 8C illustrate a comparison of the positions of the first camshaft drive gear 142 and the adjustable head idler gear 140 before and after decking the valve head 164 or the engine block 122. FIG. 8B shows the positions side by side and FIG. 8C the positions on top of each other for easier comparison. In FIG. 8C, the positions of the first camshaft drive gear 142 and the adjustable head idler gear 140 before decking are shown with dashed lines. The block idler gear 138 is attached to the engine block 122 and does not move due to decking the valve head 164 or engine block 122. In FIGS. 8A and 8B, the axes A1, A2, A3, A4 are marked with an apostrophe after the decking the valve head 164 or engine block 122 to be axes A1', A2', A3', A4'.

Decking the valve head 164 or engine block 122 causes the adjustable head idler gear 140 and first camshaft drive gear 142 to be lower than before decking the valve head 164 or engine block 122. This is easily visible in both FIGS. 8B and 8C. The distance d8 and distance d1 are approximately the same. For example, the distance d1 and distance d8 may be approximately within 0.1 mm of each other. Similarly, the distance d2 and distance d9 are approximately the same. For example, the distances d2 and d9 may be approximately within 0.1 mm of each other. The vertical distance d4 may be greater than the vertical distance d9. The vertical distances d3 and d11 may be different due to the movement of the adjustable head idler gear 140 to accommodate for the removal of height from the valve head 164. Similar to FIG. 8A, the adjustable head idler gear 140 may pivot about the pivot axis A4' set the gear mesh backlash between the adjustable head idler gear 140 and the block idler gear 138. The exact position of the adjustable head idler gear 140 may be determined using feeler gauges to set the backlash between the adjustable head idler gear 140 and the block idler gear 138.

## Claims

1. An embedded backlash adjuster (166) for an overhead cam work vehicle engine system having an engine block (122) to which is mounted a valve head (164) with a valve train (182, 184) operated by a cam shaft (178, 180) that is driven by an input gear assembly (128) including a cam gear (142) mounted to the cam shaft (178) that meshes with a head idler gear (140) which in turn meshes with an engine idler gear (138), the head idler gear (140) spanning a head gasket disposed between the engine block (122) and the valve head (164), the embedded backlash adjuster (166) comprising:
a plurality of mounting bolts (160);
a stub shaft (162) mounted to the valve head (164) or a component of the valve head (164) by the mounting bolts (160) and supporting the head idler gear (140) for rotation about a rotation axis (A1); and
a pivot member (170) extending along a pivot axis (A4) and disposed within a recess (194) in the valve head (164) or a component of the valve head (164), the stub shaft (162) being pivotable about the pivot axis (A4) with respect to the valve head (164) when not fixed securely by the mounting bolts (160) without repositioning the pivot member (170), and the pivot axis (A4) being radially offset from the rotation axis (A1) such that pivoting the stub shaft (162) about the pivot axis (A4) adjusts a mesh backlash between the head idler gear (140) and the engine idler gear (138) while maintaining a working mesh backlash between the head idler gear (140) and the cam gear (142).

2. The embedded backlash adjuster (166) of claim 1, wherein the pivot member (170) is positioned within a recess (188) in the stub shaft (162) and extends away from the stub shaft (162) along the pivot axis (A4).

3. The embedded backlash adjuster (166) of claim 1 or 2, further comprising a removable fixing member (172) for positioning the stub shaft (162) to set the mesh backlash between the head idler gear (140) and the engine idler gear (138), wherein the removable fixing member (172) is disposed in a second recess (196) in the valve head (164) or a component of the valve head (164).

4. The embedded backlash adjuster (166) of claim 3, wherein the removable fixing member (172) is positioned within a through-hole (190) in the stub shaft (162), and wherein the removable fixing member (172) extends out of the through-hole (190) and away from the stub shaft (162).

5. The embedded backlash adjuster (166) of 4, wherein the pivot member (170) comprises a first pin with one end of the first pin positioned within the recess (188) in the stub shaft (162) and an other end of the first pin positioned within the recess (194) in the valve head (164) or a component of the valve head (164), and wherein the removable fixing member (172) comprises a second pin with one end of the second pin positioned within the through-hole (190) in the stub shaft (162) and the other end of the second pin positioned within into the second recess (196) in the valve head (164) or a component of the valve head (164).

6. The embedded backlash adjuster (166) of one of the claims 3 to 5, wherein the removable fixing member (172) is positioned within a second recess in the stub shaft (162), and wherein the removable fixing member (172) extends out of the second recess and away from the stub shaft (162).

7. The embedded backlash adjuster (166) of one of the claims 3 to 6, wherein the mesh backlash between the head idler gear (140) and the engine idler gear (138) is set based on the removable fixing member (172) being positioned within the second recess (196) in the valve head (164) by rotating the stub shaft (162) around the pivot axis (A4) to align the removable fixing member (172) with the second recess (196).

8. The embedded backlash adjuster (166) of one of the claims 3 to 7, wherein prior to any decking of the valve head (164) or engine block (122), the removable fixing member (172) is used to set the mesh backlash between the head idler gear (140) and the engine idler gear (138), wherein after decking the valve head (164) or the engine block (122), the removable fixing member (172) is removed from the stub shaft (162) and the mesh backlash between the head idler gear (140) and the engine idler gear (138) is set based on feeler gauges.

9. The embedded backlash adjuster (166) of one of the claims 1 to 8, wherein the pivot axis (A4) is positioned above the rotation axis (A1) and toward the cam gear (142).

10. The embedded backlash adjuster (166) of one of the claims 1 to 9, wherein the stub shaft (162) defines a plurality of mounting holes (186), wherein the plurality of mounting bolts (160) extend through the mounting holes (186), wherein each mounting hole (186) comprises a hole diameter larger than a shaft diameter of the mounting bolt (160) extending through the hole (186), and wherein when the stub shaft (162) is not fixed securely by the mounting bolts (160), the hole diameter being larger than the shaft diameter is to allow the stub shaft (162) to pivot about the pivot axis (A4) for adjustment of the mesh backlash between the head idler gear (140) and the engine idler gear (138).
